# EUROPEAN PATENT APPLICATION

(11) **EP 3 480 262 A1**
(43) Date of publication of application: **08.05.2019**
(21) Application number: 18168218.8
(22) Date of filing: 19.04.2018
(51) Int. Cl.: C09D 5/08, C09D 125/08, C09D 135/06, C09D 7/63, C09D 125/14

(54) **WATER BORNE FAST DRYING RAPID PAINT DIRECTLY APPLIED ON METAL SURFACES**

(30) Priority: 07.11.2017 TR 201717396
(71) Applicant: Polisan Kansai Boya Sanayi ve Ticaret Anonim Sirketi, Kocaeli (TR)
(72) Inventor: MIZRAHI, Erol, 41455 KOCAEL (TR)
(74) Representative: Yamankaradeniz, Kemal

(57) **Abstract**

Invention relates to water borne fast drying paint composition applied onto metal surfaces and having protective, decorative, durable, strong adhesion capability. The invention is characterized in that it comprises water borne styrene acrylic binder in order to provide completion of touch drying less than half an hour.

## Description

### The Related Art

Invention relates to water based fast drying paint composition applied onto metal surfaces and having protective, decorative, durable, strong adhesion capability.

The invention particularly relates to a paint composition composed of water borne styrene acrylic binder and flash rust inhibitor in order to ensure completion of touch drying in a short period less than half an hour.

### Background of the Invention

Surfaces of metals exposing to external factors such as air; water etc corrode in time, by their very nature. The simplest corrosion incident of metals is known as oxidization. For that reason, metals are subjected to painting in terms of both resistance against corrosion and aesthetic appearance.

In the state of art mostly solvent based fast drying (rapid) metal paints are used for the metal surfaces. Since mentioned paints are solvent based, they contain high VOC (volatile organic compound). VOCs are instable and carbon containing volatile compounds. These evaporating chemicals pollute air by the interaction with other elements. In addition, they may also cause adverse effects such as headache, irritation, eye watering and dizziness. Solvent emissions are released into environment during manufacture and use of solvent based paints for metals. As they are used after thinning by use of thinner and similar synthetic based materials, solvent emission is high and affects user's health adversely. In addition, organic solvents are used for cleaning of solvent based paints and such solvents cause harm to both human health and environment.

In the related art, easily applicable, odourless, water borne metal paints which are thinned and cleaned with water are also used. However, since drying of water based metal paints takes at least some hours, they do not indicate rapid drying and are not included in rapid paints category.

Some applications related to the paints used in metal surface in the related art were found. One of them is patent application numbered TR 2011 01983 entitled "durable, rapid drying ink composition applicable to various surfaces". The abstract of the invention reads as: The invention relates to solvent based ink composition consisting of at least a pigment based colouring agent at 4 - 20 % by mass, at least a binder agent at rate of 6 -12 % by mass, a solvent at rate of 50 - 80 %, at least a plasticizer at rate of 0.5 - 5 % and an agent providing conductivity at rate of 5 - 11 %."

It is stated that the paint composition disclosed under said application can be applied onto metal surfaces and provides relatively more rapid drying than other similar ones. However, paint composition is solvent based.

Another application is the patent application numbered TR 2014 00759 filed by the applicant POLISAN KANSAI BOYA SANAYI VE TICARET ANONIM 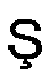 IRKETI. The abstract of the invention reads as: "The invention relates to a paint composition directly applied to metal surface without need for any preliminary treatment, preventing rust formation on the surface and consisting of water, acrylic binder, flush rust inhibitor, anti-corrosive pigment, dispersion agent and a method for manufacturing. "

Said paint composition disclosed and said invention is water based but drying feature of acrylic binder in the paint composition is not of the desired level, and does not fall in rapid paint category.

As a result, due to above described disadvantages and inadequacy of existing solutions it has been necessary to make development in the related art for water based and rapid drying paint composition.

### Purpose of the Invention

The present invention relates to water based and rapid drying paint composition applicable to metal surfaces and meeting the needs mentioned above, eliminating all disadvantages and providing some additional advantages.

Purpose of the invention is to provide fast drying (rapid) metal paint completing touch drying process in a period less than half an hour.

Purpose of the invention is to disclose a metal paint not causing solvent emission during manufacture and use as it is water based.

Purpose of the invention is to disclose a metal paint not causing adverse effects on both environment and human health as it does not contain an organic solvent.

Purpose of the invention is to enable use of easy to apply, clean and odourless metal paint.

In order to achieve the above purposes, it is a paint composition applied onto metal surfaces and consisting of a dispersing agent, film forming agent and flush rust inhibitor and it is characterized in that it comprises water borne styrene acrylic binder in order to provide completion of touch drying less than half an hour.

In order to achieve the above purposes, it is a method of manufacturing a paint composition applied onto metal surfaces and providing completion of touch drying less than half an hour and it is characterized in that it comprises process steps of
a) adding dispersing agent into dispersion tank,
b) adding film forming agent and flash rush inhibitor and
c) Adding water borne styrene acrylic binder.

The structural and characteristics features of the invention and all advantages will be understood better in detailed descriptions below, and therefore, the assessment should be made taking into account the detailed explanations.

### Detailed Description of the Invention

In this detailed description, the preferred embodiment of the water based rapid drying paint composition applied onto metal surfaces and having decorative, durable, strong adhesion capability have been disclosed only for the purpose of better understanding of the subject and described in a manner not causing any restrictive effect.

The invention is a paint composition comprises water borne styrene acrylic binder and flash rust inhibitor in order to provide faster drying than its similar ones. The most important feature of the invention is that said paint composition completes touch drying in a period shorter than half an hour and falls in fast drying (rapid) paint category.

### Formula of paint composition disclosed under the invention:

| **Content** | **Preferred quantity by weight (%)** | **By weight quantities that can be used (%)** |
|---|---|---|
| Water | 6 | 5 - 10 |
| Dispersing agent | 1 | 0,5 - 2 |
| Wetting agent | 0,3 | 0,1 - 1 |
| Defoamer | 0,4 | 0,2 - 0,6 |
| pH adjuster | 0,15 | 0,1 - 0,2 |
| Flash rust inhibitor | 1 | 0,5 - 1,5 |
| Pigment and/ or filler | 17 | 10 - 40 |
| Binder (water based styrene acrylic binder) | 69 | 65 - 75 |
| Freeze-Thaw Stabilizer | 0,65 | 0,1 - 2 |
| Film forming agent | 4,20 | 1 - 7 |
| Thickener | 0,3 | 0,2 - 0,5 |

### Method for manufacture of paint composition disclosed under the invention:

- Water of 20 - 25 °C ambience temperature is filled in the high speed dispersion tank.
- Dispersing agent, wetting agent and pH adjuster are added to the water at one minute intervals.
- The obtained mixture is mixed at 400 - 500 rpm until a homogenous mixture is obtained,
- Pigment and/ or filler is added and dispersion process is conducted at 1000 rpm for 20 minutes,
(Cooling water of high speed dispersion tank is turned on during dispersion process and turned off after completion of dispersion process)
- Once dispersion is completed, grinding is controlled and binder is added at 400 - 500 rpm.
- Then at one minute intervals, freeze-thaw stabilizer, film forming agent, defoamer, flash rust inhibitor and thickener is added and mixed at 500 rpm for 5 to 10 minutes.

Said film forming agent corresponds to 2 agents, namely film forming agent 1 and/or film forming agent 2. Propylene glycol methyl ether is used as film forming agent 1. 2,2,4-trimethyl- 1,3- pentadiol diisobutyrate is used as film forming agent 2.

Binder used in said invention is water based styrene acrylic. Binder selection is specifically made to provide touch drying in a period shorter than half an hour. In addition, selection of binder provided metal adhesion strength at minimum GT 1 level according to DIN EN ISO 2409 standard.

With addition of flash rust inhibitor, both storage in metal box is provided and rust formation during drying on the applied surface is prevented.

The tank used in production of paint composition disclosed under the invention, provided high speed dispersion. Moreover, heating or cooling can be made when required by help of hot or cold water feeding over the tank.

After adding pigment and/ or filler, the dispersion in cold is conducted at high speed. Thus wetting and grinding of pigment or filler is provided.

While filler-is reduces the cost, it also increases the viscosity.

## Claims

1. A paint composition directly applied onto metal surfaces and comprising a dispersing agent, film forming agent and flush rust inhibitor and it is **characterized in that** it comprises water borne styrene acrylic binder in order to provide completion of touch drying less than half an hour.

2. The paint composition according to claim 1 and it is **characterized in that** it comprises dispersing agent in the ratio of 0,5 - 2 % by weight, film forming agent in the ratio of 1 - 7 % by weight, flash rust inhibitor in the ratio of 0,5 - 1,5 % by weight and water borne styrene acrylic binder in the ratio of 65 - 75 % by weight.

3. The paint composition according to claim 1 and it is **characterized in that** said film forming agent is either propylene glycol methyl ether or 2,2,4 - trimethyl - 1,3 - pentadiol diisobutyrate.

4. The paint composition according to claim 1 and it is **characterized in that** it comprises wetting agent in the ratio of 0,1 - 1 % by weight.

5. The paint composition according to claim 1 and it is **characterized in that** it comprises pH adjuster in the ratio of 0,1 - 0,2 % by weight.

6. The paint composition according to claim 1 and it is **characterized in that** it comprises pigment and/or filler in the ratio of 10 - 40 % by weight.

7. The paint composition according to claim 1 and it is **characterized in that** it comprises freeze-thaw stabilizer in the ratio of 0,1 - 2 % by weight.

8. The paint composition according to claim 1 and it is **characterized in that** it comprises defoamer in the ratio of 0.2 - 0,6 % by weight.

9. A method of manufacturing a paint composition to be directly applied onto metal surfaces, comprising process steps of
a) adding dispersing agent into dispersion tank,
b) adding film forming agent and flash rush inhibitor
and it is **characterized in that** in order to provide completion of touch drying in a period shorter than half an hour, it comprises process step of
c) adding water borne styrene acrylic binder between process steps a and b.

10. The method according to claim 9 and it is **characterized in that** it comprises dispersing agent in the ratio of 0,5 - 2 % by weight, film forming agent in the ratio of 1 - 7 % by weight, flash rust inhibitor in the ratio of 0,5 - 1,5 % by weight and water borne styrene acrylic binder in the ratio of 65 - 75 % by weight.

11. The method according to claim 9 and it is **characterized in that** said film forming agent is either propylene glycol methyl ether or 2,2,4 - trimethyl - 1,3 - pentadiol diisobutyrate.

12. The method according to claim 9 and it is **characterized in that** a wetting agent in the ratio of 0,1 - 1 % by weight and pH adjuster in the ratio of 0,1 - 0,2 % by weight are added together with dispersing agent in the process step a.

13. The method according to claim 9 and it is **characterized in that** pigment and/or filler in the ratio of 10 - 40 % by weight is added after process step a and before adding binder.

14. The method according to claim 9 and it is **characterized in that** freeze-thaw stabilizer in the ratio of 0,1 - 2 % by weight is added in the process step b.

15. The method according to claim 9 and it is **characterized in that** defoamer in the ratio of 0,2 - 0,6 % by weight is added in the process step b.
